(19)

Europäisches
Patentamt
European
Patent Office
Office européen
des brevets

(11) **EP 3 825 368 A1**

(12) **EUROPEAN PATENT APPLICATION**

(43) Date of publication:
**26.05.2021 Bulletin 2021/21**

(21) Application number: **19210419.8**

(22) Date of filing: **20.11.2019**

(51) Int Cl.:
*C09D 103/02* (2006.01)  *C09D 103/04* (2006.01)
*C09D 103/08* (2006.01)  *C09D 103/10* (2006.01)
*C09D 113/02* (2006.01)  *C09D 109/06* (2006.01)
*D21H 19/54* (2006.01)  *D21H 19/58* (2006.01)
*C08B 31/10* (2006.01)  *C08B 31/18* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **Coöperatie Koninklijke Avebe U.A.
9641 GK Veendam (NL)**

(72) Inventors:
• **Delnoye, Didier André Pierre
9641 GK Veendam (NL)**
• **Laan, Simon Petrus Jozef
9641 GK Veendam (NL)**

(74) Representative: **V.O.
P.O. Box 87930
2508 DH Den Haag (NL)**

(54) **PLASTICISER FREE BARRIER COMPOSITION**

(57)    The invention relates to a coating composition for reducing hydrocarbon migration through a cellulosic substrate, the coating composition comprising
- starch having a weight average molecular weight of between 500 kDa and 20.000 kDa;
- a synthetic latex polymer, wherein the polymer has a Tg of between -10 °C and 25 °C.

EP 3 825 368 A1

## Description

The invention relates to a coating composition for reducing hydrocarbon migration through a cellulosic substrate, a method for reducing hydrocarbon migration through a cellulosic substrate and to a cellulosic substrate comprising said coating.

## BACKGROUND

Recycled paper and cardboard often contain mineral oils such as mineral oil saturated hydrocarbons (MOSH) and mineral oil aromatic hydrocarbons (MOAH). These mineral oils are present in the ink that is commonly used for printing paper or cardboard. When this recycled material is used as packaging material for food products, the mineral oils can migrate through the packaging material into the food product. Since MOSH and MOAH are expected to be carcinogenic even at very small concentrations, Food and Health authorities have proposed to set the limit of mineral oils in a food product to a maximum of 2 mg/kg and 0.5 mg/kg for MOSH and MOAH respectively.

To be able to meet these standards, packaging materials are required which are essentially free of MOAH and MOSH for the safe packing of food products. However, since MOAH and MOSH are relatively volatile and have the ability to migrate rapidly, the prevention of contamination of food products with these mineral oils has proven to be a challenge.

For example, a study showed that a pack of noodles contained already more than the permitted concentration of mineral oils (a total of MOSH and MOAH of about 6.1 mg/kg) after standing in a box containing MOSH and MOAH for only six weeks.

Furthermore, it was demonstrated that food products stored in non-recycled materials absent of MOSH and/or MOAH were already contaminated, because they were transported in secondary packaging material comprising the mineral oils.

Thus, MOSH and MOAH appear to be able to migrate through multiple layers of cardboard or paper, as well as through plastics such as polyethylene.

One potential solution to prevent mineral oils from migrating into food products is to avoid the use of recycled material for both primary and secondary material. This solution has the disadvantage that it is associated with a large increase in costs.

Alternatively, recycled cardboard and paper can be cleaned to remove harmful mineral oils, prior to converting them into packaging materials. Inevitably, such cleaning requires the use of detergents and higher temperatures, altogether making the cleaning process a costly and not sustainable operation.

Therefore, the most practical solution to prevent carcinogenic mineral oils from contaminating food products, appears to be to provide the packaging material with a protective coating, withholding the oils from migrating further to the food product.

Several coatings able to prevent migration of mineral oils are known in the art. For example, EP2740685 describes (crosslinked) polyvinyl alcohol coatings which were found to exhibit good barrier properties towards mineral oils. Due to the high viscosity however, the total solids content of the coating is adversely affected. Low total solids contents are associated with high processing costs, due to the time and energy required to dry the packing material and the reduction in production speed.

In addition, polyvinyl alcohol is derived from oil based materials and hampers the recyclability of the finished packaging material, which reduces the sustainability of the packaging material and consequently increases waste production. Furthermore, polyvinyl alcohol is rather expensive, thus increasing costs of the production of packing materials.

Another compound with good barrier properties is (modified) starch, such as described in EP3047068. The advantage of utilizing starch is that it is relatively cheap, biodegradable and food contact proof. However, the sole use of starch as barrier coating renders a packaging material which is brittle, i.e. making it difficult to fold without crumbling or cracking of the barrier coating. Plasticizers, such as sorbitol, glycerol or certain saccharides, are therefore typically added to improve flexibility of the packing material. However it was found that the barrier properties of starch-based coatings with plasticizer deteriorate over time, i.e. they suffer from ageing. This is in particular a problem for coating of packaging materials used to store food products with a long expiration date.

Coating compositions based on synthetic latex as major component are known to have poor barrier properties. Kleebauer et al. showed that an acrylate latex coating with a coat weight of 15 $g/m^2$ applied on calendered kraft paper (120 $g/m^2$) hardly reduced the migration of surrogate substances for mineral oil hydrocarbons when determined via the Tenax method (10 days at 40°C). On average more than 90% of the surrogate substances migrated through the acrylic coating layer. (Kleebauer M. et al., Biofibre magazine, IPW, 7-8, 2018, pag. 26-30). In addition, Kleebauer et al. disclosed that addition of inorganic pigments, such as kaolins, to a barrier coating significantly improves the barrier properties of the coating. It is estimated that this improvement is due to the so-called tortuosity effect and therefore it is expected that platy shaped pigments are most effective in improving the barrier properties of a coating.

WO2016/174309 refers to coating composition comprising a dispersion of platy particles and precipitated calcium carbonate for providing gas barrier and mineral oil barrier properties to a material. In one embodiment, the composition additionally comprises a binder which is selected from polymer latexes, water-soluble derivative of natural polymers, such as starch, protein, carboxy methyl cellulose or other cellulose derivatives, or synthetic polymers, such as polyvinyl alcohol, or mixtures of two or more of the said binders. However, the main disadvantage of coating compositions comprising pigments is increased brittleness of the dried coating and reduced flexibility.

Hence, there is still a need for an improved coating with improved stability which is able to reduce migration of unwanted hydrocarbons such as MOSH and MOAH into food products.

The inventors surprisingly found that a starch based coating composition in the presence of synthetic latex provides a coating composition with good mechanical properties, in particular good flexibility, without adversely affecting the barrier properties of the coating and without ageing effects. It is an object of the invention to provide such a coating.

Accordingly, the invention relates to a coating composition for reducing hydrocarbon migration through a cellulosic substrate, the coating composition comprising

- starch having a weight average molecular weight of between 500 kDa and 20.000 kDa;
- a synthetic latex polymer, wherein the polymer has a Tg of between -10 °C and 25 °C.

The inventors surprisingly found that with a coating composition according to the invention, migration of hydrocarbons through a cellulosic substrate was significantly reduced and remained stable over time. Furthermore, the coating composition exhibited acceptable mechanical properties, such as good flexibility and strength, hence making the coating composition highly suitable as coating of packaging material.

It was further discovered that the coating compositions of the invention do not significantly suffer from ageing. In a preferred embodiment, the coating composition has an ageing ratio of less than 5, preferably less than 2, more preferably less than 1 and most preferably less than 0.5.

To assess the barrier properties of the coating composition, i.e. the ability of the coating to reduce or prevent migration of hydrocarbons through a substrate, typically the permeability of a cellulosic substrate with a model compound is evaluated.

A standard model compound to assess the resistance of coated substrates against migration of MOSH/MOAH is n-hexane (Kleebauer M. et al., Biofibre magazine, IPW, 7-8, 2018, pag. 26-30). In the hexane vapour transmission test, the flux $J$ of hexane vapour through a substrate is measured. Accordingly, the permeability (P) can be determined using (a derivative of) Fick's Law (equation 1), wherein a lower permeability, reflects better barrier properties.

$$J = P * \frac{(p1-p2)}{h} \qquad (1)$$

wherein,

$J$ = Hexane flux in $kg/s.m^2$;
$P*10^{12}$ = Permeability coefficient in $kg/s.m.bar$;
$p1$ = partial vapour pressure at inside of the cup = 0.185 bar at 23°C;
$p2$ = partial vapour pressure outside cup = 0 bar; and
$h$ = thickness of the layer in m

The thickness of the layer of the coating can be derived from the coat weight ($g/m^2$) divided by the density of the coating. The density of a typical coating is about $1.5*10^6$ $g/m^3$.

Coating compositions with good barrier properties preferably have a permeability of 15 kg/smbar or less, more preferably 10 kg/s m bar or less, even more preferably 5 kg/s m bar or less.

It was found that the coating of the invention is advantageously more resistant to ageing. Ageing is defined herein as the deterioration of the barrier properties of the coating, i.e. the ability of the coating to prevent hydrocarbons from migrating through the substrate, over time. Ageing can be calculated by comparing the barrier properties at a chosen starting point with the barrier properties after a certain amount of time. In principle, any method which is suitable to determine the barrier properties of the coating can be used, as long as twice the same method is employed, for accurate comparison. A common method to determine ageing is by taking the ratio between hexane vapour transmission rate (HVTR) measured at time is 0 (t=0) divided by the HVTR measured three months after the first measurement, i.e. t = three months. This is called the "ageing ratio".

The permeability coefficient is the product of the diffusion coefficient (D) and solubility coefficient (S). Using equation 2, the permeability of the coating can be calculated:

$$P = S \times D \qquad (2)$$

D can be determined from the flux at steady state at constant concentration. Reference is made to George, S.C. and Thomas S. (Prog. Poly. Sci, 2001, 26, 985-1017, Transport phenomena through polymeric systems) for methods to determine the diffusion and solubility coefficient of a permeant through a membrane system. Analysis of the sorption of vapour by the barrier material is a good tool for comparing the affinity of different barrier materials for the permeant.

The coating composition preferably has an absorbance (S) of 10% or less, more preferably of 7% or less, even more preferably 5% or less, most preferably 3%.

A further advantage of the coating composition is that cellulosic material coated with the coating composition typically has good mechanical properties, without needing a plasticizer. Thus, cellulosic material coated with the coating composition of the invention is sufficiently strong and flexible and can thus be folded without inducing cracking of the coating composition. Such mechanical properties are required for the application on packaging material.

The coating composition of the invention comprises a starch having a weight average molecular weight of between 500 kDa and 20.000 kDa.

Natural, untreated starch is polymer essentially comprised of two polyglucans, i.e. amylose and amylopectin. In regular starch, the quantity of amylose is 17 w/w % to 40 w/w % of the starch, and the quantity of amylopectin is 60 w/w % to 83 w/w %.

Typically, regular potato starch comprises about 20 w/w % amylose and 80 w/w % amylopectin Both polyglucans are composed of glucose units. Amylose is mainly linked through $\alpha(1,4)$ linkages to form long, essentially linear chains with thousands of glucose units, whereas amylopectin, typically the major component of starch, is a (non-linear) polymer consisting of $\alpha(1,4)$-linked glucose units, comprising multiple $\alpha(1,6)$-branch points. The weight-average molecular weight of starch is in the order of about $10^2$ MDa.

The average molecular weight of the starch component of the coating composition is relevant for obtaining suitable barrier coating properties. Without wishing to be bound by theory, it has been found that a high weight average molecular weight is beneficial for both providing the coating composition with good mechanical properties such as high strength as well has good barrier properties. It is envisaged that the high weight average molecular weight allows for entanglement of the starch molecules thereby creating a strong network of starch molecules, which creates an excellent coating composition.

However, a high weight average molecular weight leads to an increased viscosity of the starch solution which results in a low dry solids content and thus high processing costs, due to the energy which is required to dry the coating composition. In addition, evaporation of water can lead to the formation of pinholes in the (dry) coating, which reduces the barrier properties of the coating composition.

Therefore, an optimal balance between a high and low weight average molecular weight of starch is required, to obtain a coating composition with optimal barrier properties. Thus, it has been found that the starch to be included in the coating composition has a molecular weight of between 500 kDa and 20.000 kDa. Preferably, the molecular weight is at least 1000 kDa and less than 17.000 kDa. More preferably, the molecular weight is between at least 2000 kDa less than 15.000 kDa.

The molecular weight is expressed as the weight average molecular weight in daltons. The term "daltons" is well known in the art and is a unit used for measuring atomic mass, equal to one twelfth of the mass of an atom of carbon in its commonest form, carbon-12 (see Cambridge Dictionaries Online - http://dictionary.cambridge.org/dictionary/british/atomic-mass-unit).

The weight average molecular weight depends on the number of molecules present, as well as on the weight of each molecule and can be calculated using the equation (3)

$$Mw = \Sigma\ wi^*Mi, \qquad (3)$$

wherein wi is the weight fraction of a polymer with molecular weight Mi. The skilled person can determine the weight average molecular weight of starch by commonly known methods.

The weight average molecular weight of starch can be reduced with any method known to the skilled person, for example using a method as described in R.L. Whistler et al Starch (Chemistry and Technology, 1984, 2nd edition, Academic press Inc.). Preferably, the molecular weight of the starch is reduced using suspension methods, which have the advantage that residual components can be effectively removed by washing of the crude product.

The molecular weight of starch is preferably reduced by oxidation of the starch with an oxidizing agent, such as using sodium hypochlorite or hydrogen peroxide. Suitably oxidised starches have been described for example in WO 2018/062993. Consequently, the invention preferably relates to a coating composition comprising an oxidized starch having a molecular weight of between 500 kDa and 20.000 kDa.

The starch is characterized by a viscosity, determined on a 15 wt.% aqueous solution by a Brookfield LVF viscometer at 60 rpm and at 50 °C, of 10 - 150 cP. The type of spindle used to determine the viscosity is generally known from instruction manuals with a specific type of viscometer. A preferred viscosity is 15-140 cP, more preferably 25 - 120 cP.

Preferably, the oxidized starch is an oxidized carboxylated starch, a type of starch in which the glucosidic moieties present in starch are at least partly oxidized to a carboxylate group. Preferably, the oxidized carboxylated starch has a carboxylic substitution of between 0.01 and 0.3 mol carboxylate per mol starch. More preferably, between 0.02 and 0.25 mol carboxylate per mol starch, most preferably between 0.04 and 0.2 mol carboxylate per mol starch.

The degree of carboxylic substitution of starch can be determined with any method known in the art. Typically, the degree of carboxylic substitution is determined using an acid-base titration in the presence of a pH indicator, such as phenolphthalein.

An oxidized carboxylated starch is preferably obtained using a method as described in WO2017/138814.

Another method to reduce the molecular weight of starch is by dextrinization or hydrolysis under acidic conditions.

Dextrinization is typically achieved by subjecting the starch to dry heat under acidic conditions, inducing breaking down of starch polymers to form dextrins. Dextrins are mixtures of polymers composed of glucose units linked by $\alpha(1,4)$ or $\alpha(1,6)$ linkages.

Suitable acids which can be employed for acidic hydrolysis of the starch are mineral acids such as hydrochloric acid, sulfuric acid, phosphoric acid or nitric acid. Typically hydrolysis takes place at a pH of between 0.1 and 4, more preferably between 0.2 and 3, even more preferably between 0.3 and 2, most preferably between 0.4 and 1.

The weight average molecular weight of starch can also be reduced by enzymatic degradation, for example using amylases, as is known in the art.

It is further preferred that the starch is stabilized. Stabilization can be achieved by esterification or etherification of at least part of the hydroxyl groups on the starch backbone.

Esterification is in general done by reacting the hydroxyl groups with acetyl groups. Acetylation can be conducted by treating the isolated starch with acetic anhydride or vinyl acetate under alkaline conditions. In a preferred embodiment, the starch is an acetylated starch.

Preferably, the degree of substitution, i.e. the average number of hydroxyl groups acetylated per glucosyl unit is preferably between 0.01 and 0.2, preferably between 0.02 and 0.15, more preferably between 0.02 and 0.07 mole/mole.

Etherfication can be done with several reagents in which the reagent has a halogen, halohydrin, epoxide or glycidyl group as reactive site. In a preferred embodiment the stabilization is achieved by hydroxyalkylation such as hydroxyproylation, hydroxybutylation, hydroxyethylation and/or carboxymethylation.

Preferably, the stabilized starch is a hydroxypropylated starch or hydroxyethylated starch.

Hydroxyethylation or hydroxypropylation can be conducted by treating the isolated starch with ethylene oxide or propylene oxide in aqueous suspensions under alkaline conditions. Suitable alkaline conditions are provided by alkali metal hydroxides, such as sodium hydroxide, potassium hydroxide, cesium hydroxide or lithium hydroxide, or other hydroxides, such as ammonium hydroxide, magnesium hydroxide, or carbonates such as sodium carbonate or mixtures thereof. Preferred conditions are solutions or suspensions of sodium and/or potassium hydroxide and sodium carbonate. Preferably, the alkaline aqueous suspension or solution has a pH of at least 9, preferably at least 10, more preferably at least 11, most preferably at least 11.5.

Salts such as sodium chloride or sodium sulfate can also be added as swelling inhibitors to prevent swelling of starch granules during the reaction. The resulting stabilized starch is called hydroxypropylated or hydroxyethylated starch.

The degree of substitution of etherified starches is generally expressed as molecular substitution (MS), i.e. the molar number of substituents divided by the molar number of glucosyl units. The MS is preferably between 0.01 and 0.3, preferably between 0.5 and 0.2, more preferably between 0.10 and 0.15 mole/mole.

Preferably, the starch is a highly branched starch, which has been described in EP2867409. Coating compositions comprising highly branched starch were found to have a positive influence on the runnability during filmpress coating, due to improved film splitting behaviour and avoidance of misting, which reduces the number of surface damages such as orange peel formation or pin holes.

Another preferred starch is waxy starch. Waxy starches are starches which are characterised by a low amylose content. In an embodiment the starch has a low amylose content, preferably an amylose content of 20% or less, more preferably an amylose content of 10% or less, even more preferably 5% or less, even more preferably 1% or less and most preferably 0.5% or less.

The advantage of using an etherified or starch with a low amylose content, such as a waxy starch, is that they typically comprise excellent film forming ability and visco-stability which enables the application of high solids coating which is beneficial for continuous film formation and reduced drying energy.

The starch may be any of any source, as long as it has the required weight average molecular weight. The weight average molecular weight can be reduced using any method known in the art. The skilled person knows how to determine the weight average molecular weight. Preferably, the starch is a root or tuber starch.

Root or tuber sources of starch are well known in the art, and such sources include the species of potato (*Solanum tuberosum* or Irish potato), sweet potato (*Ipomoea batatas),* cassava (also known as tapioca, *Manihot esculenta,* syn. *M. utilissima*), yuca dulce (*M. palmata,* syn. *M. dulcis*), yam (*Dioscorea spp*), yautia (*Xanthosoma spp.,* including *X. sagittifolium*), taro (*Colocasia esculenta*), arracacha (*Arracacoa xanthorrhiza*), arrowroot (*Maranta arundinacea*); chufa (*Cyperus esculentus*), sago palm (*Metroxylon spp.*), oca and ullucu (*Oxalis tuberosa* and *Ullucus tuberosus*), yam bean and jicama (*Pachyrxhizus erosus* and *P. angulatus*), mashua (*Tropaeolum tuberosum*) and Jerusalem artichoke or topinambur (*Helianthus tuberosus*). Root or tuber starches are distinguished from other starch types, such as cereal starches (including e.g. corn starch, wheat starch), and bean starches (e.g. pea starch, soybean starch).

Thus, the term root or tuber starch includes preferably starch of potato, sweet potato, cassava, yuca dulce, yam, yautia, taro, arracacha, arrawroot, chufa, sago palm, oca, ullucu, yam bean and topinambur. Preferably, the root or tuber starch is a starch of potato, sweet potato, cassava or yam, more preferably of potato, sweet potato or cassava, and most preferably the root or tuber starch is a potato starch (derived from *Solanum tuberosum*).

In preferred embodiments, the starch is a root or tuber starch, preferably potato starch. The starch is preferably oxidised, having a molecular weight as defined elsewhere. Most preferably, the starch is an oxidised carboxylated starch. In preferred embodiments, the starch is a waxy starch. Thus in a much preferred embodiment the starch is an oxidised carboxylated waxy potato starch. In further much preferred embodiments, the starch is a stabilized starch, most preferably a hydroxypropylated or a hydroxyethylated starch.

The coating composition of the invention further comprises a synthetic latex polymer, wherein the polymer has a Tg of between -10 °C and 25 °C. Preferably, the synthetic latex polymer is present in a weight ratio to starch of 10:1 to 1:10, based on the dry weight of starch and latex, preferably in a weight ratio between 2:1 to 1:8, most preferably in a weight ratio between 1:1 to 1:6.

A synthetic latex polymer is a type of synthetic polymer that has good elastomeric properties and resembles the chemical and physical properties of natural latex, or rubber, which is extracted from the rubber tree (*Hevea brasiliensis*). Different types of synthetic latex exist, such as polyisoprene, polychloroprene (neoprene), polyisobutylene, styrene butadiene and styrene acrylate.

Other well known synthetic polymers, which are also often employed in barrier coating compositions, such as polyvinyl alcohol or poly(vinyl alcohol-co-ethylene), are not synthetic latex polymers as defined herein.

Preferably, the coating composition comprises a synthetic latex which has been prepared by emulsion polymerisation. Polymer emulsions can be prepared as disclosed in the prior art, for example by A. van Herk in "Chemistry and Technology of emulsion polymerisation" (Blackwell publishing, 2005). Emulsion polymerisation refers to a polymerisation method in water in which the monomer is dispersed in droplets stabilised by surfactants. Polymerisation takes place in nucleated micelles whereas the monomer droplets act as a reservoir of fresh monomer. The resulting polymer is an emulsion of polymer droplets stabilised by surfactants having a diameter ranging between 10 nm and 5000 nm, more typically between 80 and 300 nm.

Thus, the synthetic latex polymer is preferably present in the coating composition in the form of droplets having a diameter between 10 nm and 5000 nm, preferably between 50 and 1000 nm, more preferably between 80 and 300 nm. In a coating composition of the invention, the droplets are dispersed into an aqueous phase comprising the starch.

Suspension polymerisation is another method of preparing synthetic latex polymers that can be used in the coating according to the invention. The main difference with emulsion polymerization is that suspension polymerization requires the presence of a monomer soluble initiator rather than a water-soluble initiator and requires a stabilizing agent which does not form micelles.

Various monomers are suitable for the preparation of the synthetic latex polymer, such as styrene, butadiene, butylacrylate (n-butylacrylate or iso-butlylacrylate) and acrylic acid. The synthetic latex polymer can be a homopolymer or a co-polymer. Preferably the synthetic latex polymer is a co-polymer obtained by emulsion polymerisation of monomers selected from the styrene and butadiene, styrene and butylacrylate, (meth)acrylate and butylacrylate and mixtures thereof. Optionally other monomers are included such as acrylic acid and/or acrylonitrile or other functional co-monomers which are used to tune the functional properties of the latex. The obtained emulsion polymers are generally referred to as styrene-butadiene lattices, styrene-acrylate lattices or acrylate-lattices.

The chemical and physical properties of the synthetic latex polymers can be influenced by the type of monomer that is used, and in case the polymer is a co-polymer, by the ratio between the different monomers. Thus, when selecting monomers with high hydrophobicity, a polymer with hydrophobic character is likewise obtained. Similarly, by selecting rigid monomers or monomers that form rigid bonds upon polymerization, the flexibility of the polymer can be influenced. Furthermore, the concentration of monomers added to the emulsion polymerisation defines the dry solids content of the obtained synthetic latex emulsion. Thus, careful selection of monomers and reaction conditions provides a tool towards obtaining a polymer with desired properties.

If the synthetic latex polymer is a styrene-butadiene co-polymer, preferably the ratio between styrene and butadiene is between 70/30 and 50/50. If the synthetic latex polymer is a styrene-acrylate polymer, preferably the ratio between styrene and butyl-acrylate is between 70/30 and 50/50. The latex may further comprise between 1 to 9% of a hydrophilic monomer such as acrylic acid, or acrylonitrile.

The synthetic latex preferably has a dry solids content of between 30-60%, more preferably between 40-55%, most preferably between 48-52% based on the total weight of the emulsion.

The synthetic latex polymer has a glass transition temperature (Tg) of between -10°C and +25°C, preferably between 0°C and +15°C. The glass transition of a polymer is the transition in which a solid polymer changes from a melt or from a rubbery, flexible state to a polymer glass or a polymer glass. The glass transition temperature is defined as the temperature or temperature range at which this transition takes place. The glass transition temperature indicates the mechanical properties of the polymer. A high glass transition temperature, well above room temperature indicates that the polymer is glassy at room temperature, whereas a low glass transition temperature indicates a more flexible polymer. The glass transition temperature of a polymer can be determined by methods commonly known in the art.

The synthetic latex polymer is typically rather hydrophobic. As a result, when preparing an aqueous coating composition, comprising the starch and the synthetic latex as defined earlier, the starch dissolves in the aqueous phase of the synthetic latex emulsion. Thus, a barrier composition is obtained with a continuous water phase comprising starch and synthetic latex polymer dispersed therein. It was found that this composition exhibits excellent barrier coating properties.

Thus, the invention further relates to a coating composition comprising an aqueous continuous phase and a hydrophobic dispersed phase, wherein the aqueous phase comprises dissolved starch (as defined elsewhere), and wherein the dispersed phase comprises synthetic latex polymer droplets (as defined elsewhere), which droplets preferably have a diameter of between 10 nm and 5000 nm.

The weight ratio between starch and synthetic latex is preferably between 10:1 and 1:10, more preferably between 8:1 and 1:2, even more preferably between 6:1 and 1:1, based on dry solids.

Preferably, the combined amount of starch and synthetic latex is at least 80 wt.% based on the dry weight of the total composition. More preferably, the combined amount of starch and synthetic latex is at least 85 wt.%, 90 wt.%, 95 wt.%, 96 wt.%, 97 wt.%, 98 wt.%, 99 wt.% based on the dry weight of the total coating composition.

The coating composition may further comprise one or more polymers to modify the chemical or physical properties of the coating composition.

In a preferred embodiment, the coating composition further comprises a water soluble synthetic polymer such as polyvinyl alcohol or poly(vinyl alcohol-co-ethylene). Such polymers have the ability to reduce the surface tension of the coating composition, which enhances the film formation to proceed in a more uniform manner, thereby obtaining a more uniform coating and thus better overall barrier properties.

In large amounts, these polymers have an adverse effect on the rheological properties of the coating. Therefore, the water soluble synthetic polymer is present in an amount which is sufficient to obtain enhanced film formation, but does not significantly alter the rheological properties of the coating.

In another preferred embodiment, the coating composition does not comprise any water soluble synthetic polymer.

If the coating composition comprises a water soluble synthetic polymer such as polyvinyl alcohol or poly(vinyl alcohol-co-ethylene), the water soluble synthetic polymer is preferably present in a quantity of 1 and 10 wt.% based on the weight of starch, preferably about 1.5 - 5 wt.%, such as 1.8 - 3 wt.%, based on the weight of starch.

Furthermore, the coating composition may also comprise a pigment. A pigment in the present context is preferably a kaolin. Addition of a pigment is mostly for aesthetic reasons. If a pigment is present, presence of the pigment should not affect the nature of the emulsion as a continuous aqueous phase comprising dissolved starch, further comprising synthetic latex polymer droplets. To achieve this, the pigment is preferably present in an amount of 150 parts dry on 100 parts dry weight of starch, preferably in an amount of 25 to 100 parts dry pigment per 100 parts dry starch (dry/dry).

In another preferred embodiment, the coating composition does not comprise a pigment, or comprises only a minimal quantity of pigment. Preferably, the quantity of pigment is at most 10 parts per 100 parts dry starch, more preferably at most 5 parts per 100 parts dry starch, even more preferably at most 3 parts per 100 parts dry starch, most preferably at most 1 part per 100 parts dry starch.

The coating composition according to the invention advantageously has good mechanical properties, which allow the coating the strength and flexibility that is required during transport, storage and use of the packaging. The strength of the coating composition is expressed by its E-modulus which is defined as the force required for deformation to occur and is calculated by stress/strain. The coating composition preferably has an E-modulus of 1000 MPa or more, more preferably 1200 MPa or more, even more preferably 1400 MPa or more, most preferably 1500 MPa or more as determined using the tensile test.

The coating should be flexible enough to overcome the deformational changes upon creasing and folding the board into a packaging material. An important aspect to determine flexibility is the elongation at maximum force, above which point irreversible deformation of the coating film starts to occur. Preferably, the coating composition of the invention has an elongation at maximum force of at least 8%, preferably at least 10%, more preferably at least 11%, even more preferably at least 12% and most preferably at least 13% as determined using the tensile test.

The point at which the coating composition breaks is reflected by the elongation at break value. Preferably, the coating composition has an elongation at break of at least 15%, more preferably at least 17%, most preferably at least 19% as determined using the tensile test.

The invention provides in a coating composition that has good barrier and mechanical properties, without requiring the presence a plasticizer. The absence of a plasticizer is desirable, because coatings with plasticizers are known to suffer from ageing. Thus, in a preferred embodiment, the coating composition does not comprise a plasticizer. Preferably, the coating composition comprises at most 10% by dry weight of plasticizer based on the total dry weight of the coating composition, preferably at most 5% by dry weight, even more preferably at most 2% by dry weight based on the weight of the total composition.

A plasticizer, in this context, preferably is selected from the group consisting of polyols, in particular glycerol, sorbitol, maltitol, erythritol, xylitol, mannitol, galactitol, tagatose, lactitol, maltulose, isomalt, maltol, or may alternatively be selected from the group consisting of saccharides and oligosaccharides, preferably glucose, saccharose, sucrose, maltose, trehalose, lactose, lactulose, galactose and fructose.

The coating composition further advantageously has a high dry solids content. Preferably, the coating composition has a dry solids content of at least 30 wt.%, more preferably at least 35 wt.%, most preferably at least 40 wt.% based on the total weight of the composition. A high dry solids content is advantageous, because it allows for fast drying (thus requiring little time or energy) of the aqueous composition to form a film of the coating composition.

The starch used to prepare the coating composition of the invention is preferably a cook-up starch. The starch is preferably dissolved prior to mixing with the polymer latex. In order to obtain a coating composition with a high dry solids content, the starch needs to be dissolved at the highest possible concentration. Cook-up starches can be dissolved to 35%-45% maximum dry solids, for which reason a cook-up starch is preferred.

The maximum dry solids content is determined by the starch slurry concentration in which the products can be suspended prior to dissolution. In general, this is up to 40% for potato starch and up to 45% for cereal starches. Preferably, these types of starch are dissolved in either a batch cooking or jet cooking process. Batch cooking is a process in which dry starch is suspended in cold water in a tank equipped with a stirrer and which tank is heated until dissolution. The heating can be employed by heating the jacket of the stirred tank or by addition of live steam into the starch suspension. The starch suspension should be heated to at least 80°C, at least 85°C, preferably at least 90°C, more preferably at least 95°C, while vigorously stirring in order to obtain a completely dissolved starch solution.

The maximum dry solids content of a starch solution is limited due to the viscosity of the starch solution. The higher the molecular weight of the starch, the lower the maximum obtainable solids content due to the high viscosity of the solution during cooking, which makes stirring of the solution difficult.

Alternatively, a jet cooker can be used for obtaining a molecularly dissolved starch solution. The advantage of a jet-cooker is that it is a continuous system and temperatures above 100°C can be employed allowing the starches to be dissolved at higher concentrations than with batch cooking. A jet cooking system uses steam with a pressure between 3 to 7 bar which is reduced with a pressure reducing valve prior to mixing the live steam with the starch suspension in the jet. The starch suspension is maintained at a pressure ranging between 1.1 bar and 5 bar for 30 s to 120 s in a holding tube in order to dissolve the starch at a temperature ranging between 110°C and 150°C.

The coating composition can be in the form of a dry mixture, such as a mixture of starch and synthetic latex polymer, which is subsequently converted into an emulsion by addition of an aqueous liquid followed by homogenization. Preferably however, the coating composition is an aqueous coating composition as defined above. Also, the coating composition can be a solid coating, i.e. a coating as obtained a after drying of the aqueous composition. In such cases, the coating is preferably part of a composite comprising a cellulosic substrate as well as the solid coating composition.

If the coating composition is aqueous, it can be easily applied onto a substrate. This substrate is preferably a cellulosic substrate, where after the aqueous composition is dried and the coated cellulosic substrate is obtained and can be directly used as packaging material.

Alternatively, the aqueous coating composition may also be applied onto another substrate, for example glass. Upon drying, a film of the coating composition can be obtained, which can be used for performing tests, or which can be adhered to the cellulosic material to be coated. Hence, the invention provides in a method for reducing hydrocarbon migration through a cellulosic substrate, said method comprising

- providing a cellulosic substrate;
- coating said cellulosic substrate on at least one side with a coating composition according to the invention, and optionally drying the cellulosic substrate.

The invention further provides a method for preparing an aqueous coating composition, comprising

- providing starch having a weight average molecular weight of between 500 kDa and 20.000 kDa, preferably in the form of an aqueous solution;

- providing an aqueous emulsion of a synthetic latex polymer having a Tg of between -10 °C and 25 °C;
- mixing the starch with the emulsion of the synthetic latex polymer, thereby forming said aqueous coating composition.

Upon contacting the aqueous emulsion of synthetic latex polymer with the solution of starch, the aqueous solution of starch mixes or dissolves into the aqueous phase of the latex emulsion, thereby forming a continuous phase of starch dissolved in water with a phase of synthetic latex polymer particles dispersed therein. Preferably, the starch solution has been cooled down from the dissolution temperature to less than 80°C, preferably less than 70°C, more preferably less than 60°C prior to mixing with the synthetic polymer latex.

Furthermore, the invention relates to a cellulosic substrate which is at least partly coated with a coating composition according to the invention, wherein the coating composition is preferably solid. A solid coating composition is required for obtaining a constant permeability coefficient and thus providing the composition with good barrier properties.

In a preferred embodiment, the coating composition has a coat weight of between 3 and 25 $g/m^2$, preferably between 7.5-20 $g/m^2$. Such a coat weight provides a coating composition which is thick enough to provide a good barrier against MOSH and MOAH, whereas a thicker coat weight renders the material unnecessarily heavy and expensive. The coat weight is further dependent on the type of cellulosic material which is typically applied. For smooth material, typically a low coat weight suffices, because it allows to apply a thin, uniform coating. For less smooth materials, a higher coat weight will be required, to ensure that the material is completely covered with the coating composition.

Further, the cellulosic material preferably has a weight of 60-400 $g/m^2$.

The cellulosic material onto which the coating composition is applied may preferably have a paper smoothness of lower than 12 $\mu m$, preferably lower than 10 $\mu m$, most preferably lower than 7 $\mu m$ as determined by Parker Print Surf (PPS). After coating and drying, the surface of the barrier side is more smooth than before coating. This has also improves the esthetic aspects of the board. The smoothness of the coated board determined by PPS is lower than 7 $\mu m$, preferably lower than 6 $\mu m$, more preferably lower than 5 $\mu m$.

For the purpose of clarity and a concise description features are described herein as part of the same or separate embodiments, however, it will be appreciated that the scope of the invention may include embodiments having combinations of all or some of the features described.

The invention will now be illustrated with the following non-limiting examples.

Examples

Glycerol, Technical, ex. Merck
D-Sorbitol, Technical, ex. VWR
PVOH : PVA BF 05, ex. Ter Hell, Chang Chun: Polyvinyl alcohol with high degree of hydrolysis (>98%)
EVOH: Exceval HR 3010, ex. Kururay: poly(vinyl alcohol-co-ethylene) with high degree of hydrolysis (>98%)

Pigment:   Kaolin HG90 ex Kamin LLC
SBR 1 :    Litex PX9366 ex. Synthomer with a Tg of about 0°C
SBR 2:     Styronal D517 ex. BASF with Tg of about 0°C
SBR 3:     Litex PX9424 ex. Synthomer with a Tg of about 12°C
SA:        Plextol PX 9324 ex. Synthomer with Tg of about 18°C
Board:     Korsnäs Gävle. Duplex white top brown craft board. Grammage: 180 $g/m^2$; Thickness: 280 $\mu m$; roughness white liner side: 7.0 $\mu m$

| Name | Description | Molecular weight | Carboxylic substitution | Amylose content |
|---|---|---|---|---|
| Starch A | Oxidised waxy potato starch | 2800 kDa | 0.016 | < 0.5% |
| Starch B | Oxidised blend of waxy potato starch and regular potato starch | 1600 kDa | 0.20 | 10% |
| Starch C | Oxidised and hydroxyethylated potato starch | 3500 kDa | 0.017 | 20% |

(continued)

| Name | Description | Molecular weight | Carboxylic substitution | Amylose content |
|---|---|---|---|---|
| Starch D | Oxidised potato starch | 550 kDa | 0.045 | 20% |
| Starch E | Oxidised waxy potato starch | 6600 kDa | 0.015 | <0.5% |
| Starch F | Highly branched starch (HBS) | 1000 kDa | No | <0.5% |
| Comparative starch 1 | Acid thinned and hydroxypropylated pea starch | 14000 kDa | No | 33% |
| Comparative starch 2 | Corn dextrin (Cargill, C*Film07311) | 160 kDa | No | 25% |
| Comparative starch 3 | Oxidised potato starch | 260 kDa | 0.042 | 20% |

Molecular weight determination

Prior to dissolution, a specific amount of a root or tuber starch sample (powder (as is)) was weighed into a glass vial (20 ml). Subsequently 20 ml eluent (50 mM NaNO$_3$) was added to obtain a concentration of 2 mg/ml. The vial was capped with an aluminum/silicone septum and fitted into a heating block. The vial was heated under continuous stirring during 60 minutes at 137 °C. After cooling to room temperature some of the obtained solution was collected with a syringe (5ml), and this quantity was subsequently filtered over a 5.0 $\mu$m cellulose acetate filter into a sample vial (1.5 ml; septum/screw cap).
Molecular weight (MW) of the samples was determined after separation by asymmetric field flow and detected with MALLS/RI detector. The MW and the molecular mass distribution (MMD) were determined by means of aF4/MALLS/RI. The aF4 system consisted of a Dionex HPLC system (quaternary pump, auto sampler including a 250 $\mu$l injection loop), thermostatic column compartment, light-scattering (LS) detector (Dawn Heleos II; Wyatt), and a refractive index (RI) detector (T-rex; Wyatt). The scattered light was detected at multiple angles (18) ranging from 13° to 158°. The multi angle laser light scattering (MALLS) was serially connected with the concentration (RI) detector. A sample is fractionated via a Frit Inlet channel with a permeable wall having a 5 kDa pore size. A pullulan DIN standard (50 kDa; 2 mg/ml) was used for normalization of the MALLS, and alignment of the MALLS and RI detector (correction for inter detector delay volume and bandbroading). Samples were stored in the auto sampler at 25 °C to be processed automatically in a sequence overnight. Elution of the samples was carried out with an aqueous eluent (50 mM NaNO$_3$) at a specific flow regime at 25°C. The sample volume was set at 50 $\mu$l based on the average concentration of all samples. The data acquired during every run were collected and afterwards evaluated with the ASTRA software (version 6.1.2.84).

Example 1; preparation of oxidised waxy potato starch (Starch A)

1.0 kg of amylopectin potato starch (0.81 kg dry matter, Eliane® potato starch from AVEBE; amylopectin content >98%) was suspended in 1.0 kg of water. The temperature of the suspension was increased to 35°C. The pH was set at 9.0 by the addition of a 4.4 wt.% sodium hydroxide solution. 63.7 ml of a sodium hypochlorite solution containing 179 g/litre of active chlorine was added. During the oxidation the pH was maintained at 9.0 by the addition of a 4.4 wt.% sodium hydroxide solution. Once the reaction was complete, i.e. no chlorine was detectable with potassium iodide-starch paper, the pH was increased to 10.5 by the addition of a 4.4 wt.% sodium hydroxide solution. After one hour of alkaline post-treatment 5 ml sodium hypochlorite solution was added for decoloration. The reaction mixture was neutralized to pH 5.5 by the addition of 10 N H2SO4, whereupon the product was dewatered and washed before drying.

Example 2; Preparation of blend of oxidised potato starch and oxidised waxy potato starch (Starch B)

A mixture of 0.5 kg regular potato starch (0.41 kg dry matter, food grade potato starch from AVEBE; amylopectin content 81%) and 0.5 kg of amylopectin potato starch (0.41 kg dry matter, Eliane® potato starch from AVEBE; amylopectin content >98%) was suspended in 1.0 kg of water. The temperature of the suspension was increased to 35 °C. The pH was set at 9.0 by the addition of a 4.4 wt.% sodium hydroxide solution. 48.0 ml of a sodium hypochlorite solution containing 179 g/liter of active chlorine was added. During the oxidation, the pH was maintained at 9.0 by the addition of a 4.4 wt.% sodium hydroxide solution. Once the reaction was complete, i.e. no chlorine was detectable with potassium iodide-starch paper, the pH was increased to 10.5 by the addition of a 4.4 wt.% sodium hydroxide solution. After one hour of alkaline post-treatment 5 ml sodium hypochlorite solution was added for decoloration. The reaction mixture was neutralized to pH 5.5 by the addition of 10 N H2SO4, whereupon the product was dewatered and washed before drying.

Example 3; Preparation of oxidized and hydroxyethylated potato starch (Starch C)

1.0 kg of regular potato starch (0.81 kg dry matter, food grade potato starch from AVEBE; amylopectin content 81%) was suspended in 1.0 kg of water in a closed double jacket reaction vessel. The temperature of the suspension was increased to 35°C. The pH was set at 10.0 by the addition of a 4.4 wt.% sodium hydroxide solution. 100 ml of a sodium hypochlorite solution containing 170 g/liter of active chlorine was added while maintaining the pH at 10 by the addition of a 4.4 wt.% sodium hydroxide solution. Once the reaction was complete, i.e. no chlorine was detectable with potassium iodide-starch paper, the pH was increased to 11.4 by the addition of a 4.4 wt.% sodium hydroxide solution. Then 50 g ethylene oxide was added and the reaction mixture was stirred during 16 hours. 5 ml sodium hypochlorite solution was added for decoloration. The reaction mixture was neutralized to pH 5 by the addition of 10 N H2SO4, whereupon the product was dewatered and washed before drying.

Example 4; Preparation of oxidized potato starch (Starch D)

1.0 kg of regular potato starch (0.81 kg dry matter, food grade potato starch from AVEBE; amylopectin content 81%) was suspended in 1.0 kg of water. The temperature of the suspension was increased to 35°C. 167 ml of a sodium hypochlorite solution containing 179 g/liter of active chlorine was added while maintaining the pH at 8.2 by the addition of a 4.4 wt.% sodium hydroxide solution. Once the reaction was complete, i.e. no chlorine was detectable with potassium iodide-starch paper, the pH was increased to 10.5 by the addition of a 4.4 wt.% sodium hydroxide solution. After one hour of alkaline post-treatment 5 ml sodium hypochlorite solution was added for decoloration. The reaction mixture was neutralized to pH 5.5 by the addition of 10 N H2SO4, whereupon the product was dewatered and washed before drying.

Example 5; Preparation of oxidized waxy potato starch (Starch E)

1.0 kg of amylopectin potato starch (0.81 kg dry matter, Eliane® potato starch from AVEBE; amylopectin content >98%) was suspended in 1.0 kg of water. The temperature of the suspension was increased to 35°C. The pH was set at 9.0 by the addition of a 4.4 wt.% sodium hydroxide solution. 29.0 ml of a sodium hypochlorite solution containing 179 g/liter of active chlorine was added. During the oxidation the pH was maintained at 9.0 by the addition of a 4.4 wt.% sodium hydroxide solution. Once the reaction was complete, i.e. no chlorine was detectable with potassium iodide-starch paper, the pH was increased to 10.5 by the addition of a 4.4 wt.% sodium hydroxide solution. After one hour of alkaline post-treatment 5 ml sodium hypochlorite solution was added for decoloration. The reaction mixture was neutralized to pH 5.5 by the addition of 10 N $H_2SO_4$, whereupon the product was dewatered and washed before drying.

Example 6; Preparation of Comparative Starch 1

Six moles dry pea starch (Cosucra, Nastar, Lot no. 2016325969) is suspended in a 3L beaker using tap water to a 39.0% suspension. The beaker is covered and the suspension is brought to 45°C and 28.8 mL 10N Sulfuric acid is added. After stirring for 17 hours at 45°C, the suspension is dewatered and washed with 6L tap water. After drying for 1 night at 30°C in a drying stove, the product was grinded. From the grinded product, 5.5 moles was suspended in tap water to a 39% w/w suspension and 220 g $Na_2SO_4$ was added. At room temperature, while stirring vigorously, 187.5 g of a 4.4% NaOH solution is added dropwise. The suspension is heated to 35°C and 63.9 g propyleneoxide is added. After stirring an additional 24 hours at 35°C, the suspension is neutralized with 10N $H_2SO_4$, washed with 5.5 L tapwater and dried before grinding.

Example 7; Preparation of Comparative Starch 3

The starch was prepared according to the method described in Example 4, using 188 mL of a sodium hypochlorite solution containing 170 g/liter of active chlorine, while maintaining the pH at 7.5.

Example 8; Preparation of liquid coating compositions

An aqueous mixture of starch was obtained by suspending a dry-blend of starch (Starch A-E and Comparative Starch 1 and 3 as described above; Starch F was obtained by a method as described in EP2867409 and Comparative Starch 2 was commercially obtained from Cargill under the trade name C*Film 07311), and optionally D-Sorbitol, optionally polyvinylalcohol and optionally ethylene vinylalcohol in a tank equipped with a stirrer, in water. The obtained slurry was heated in a water bath with well-dispersed live steam to a temperature of 95 °C for 20 minutes. Then the mixture was cooled to 50 °C and optionally synthetic latex and/or glycerol was added under vigorous stirring. After mixing all compounds into the composition, the composition was stored in a stove of 50 °C prior to application.

Example 9; Preparation of a pigmented coating composition

The starch solution is prepared according to the method described in example 8. A dispersion of pigments is prepared, while stirring and the starch solution is added to the pigment dispersion. Optionally, other fluid additives such as a synthetic latex emulsion and/or glycerol are then added to the starch/pigment dispersion under vigorous stirring. After mixing all compounds into the composition, the composition is stored in a stove of 50 °C prior to application.

Example 10; Preparation of films of coatings

A glass plate of approximately 20x30 cm was wet and covered with a polypropylene sheet. Air bubbles present between the glass plate and the polypropylene sheet were removed using a rubber roller.
The fluid coating compositions were passed through a coarse filter cloth or deaerated in a centrifuge to remove all air bubbles from the solution.
A bar coater with a gap of 600 $\mu$m was placed at one end of the glass plate and approximately 10 mL of fluid coating compositions was placed in front of the bar coater. The bar coater was slowly pulled across the glass plate to form a film. The glass plate was stored in horizontal positon, as checked with a spirit level and left to dry in a climate room of 23°C, 50% RH for around 24-48 hours. The dried film was removed from the polypropylene sheet and store 23°C, 50% RH. Thickness of the films can be assessed using a digital micrometer (Messmer, model no. M372).

Example 11; Heptane Absorption test

Coating films as described in Example 10 were prepared. Each film was cut into samples of 4x5 cm and weighed on a 4 digital balance. The samples were placed in a closable glass jar containing approximately 10 mL of n-heptane. The head space of the glass jar was saturated with n-heptane by equilibrating the system for at least 24 hours at 23°C before the samples were placed in the jars. Attention was paid that the samples did not come into direct contact with n-heptane liquid. After 24 hours of equilibration, the samples were taken out and their weight was measured directly to assess the weight gain as measure for their affinity for hydrophobic volatile compounds.
The results are shown in Tables 1 and 2.

**Table 1 n-Heptane absorption tests of films prepared from reference coating compositions**

| Exp | | SBR coat | SA coat | Ref coat 1 | Ref coat 2 | Ref coat 3 | Ref coat 4 | Ref coat 5 |
|---|---|---|---|---|---|---|---|---|
| Starch A | [part] | 0 | | 100 | | 100 | | |
| Comp starch 2 | [part] | | | | 100 | | | |
| PVOH | [part] | 2 | 2 | | 10 | 2 | 2 | 2 |
| D-Sorbitol | [part] | | | | | 40 | | |
| SBR 1 | [part] | 100 | | | | | 150 | |
| SBR 3 | [part] | | | | | | | |
| SA | [part] | | 100 | | | | | 50 |
| Kaolin | [part] | | | | | | 100 | 100 |
| d.s. | [%] | 35 | | 30 | 30 | 30 | 50 | 35 |
| Absorption | [%] | 22.7 | 17.9 | 0.01 | 0.96 | 0.01 | 14.5 | 5.2 |
| Ratio latex | [%] | 100 | 100 | 0 | 0 | 0 | 60 | 33.3 |
| Abs calc. | [%] | 22.7 | 17.9 | 0.01 | 0.96 | 0.01 | 13.6 | 6.0 |

**Table 2 n-Hetane absorption tests of films prepared from coating compositions**

| Exp | | PFC 1a1 | PFC 1a2 | PFC 1a3 | PFC 1a4 | PFC 1b | PFC 2 |
|---|---|---|---|---|---|---|---|
| Starch A | [part] | 100 | 100 | 100 | 100 | 100 | 100 |
| Comp starch 2 | [part] | | | | | | |
| PVOH | [part] | 2 | 2 | 2 | 2 | 2 | 2 |
| D-Sorbitol | [part] | | | | | | |
| SBR 1 | [part] | 100 | 75 | 50 | 25 | | |
| SBR 3 | [part] | | | | | 50 | |
| SA | [part] | | | | | | 50 |
| Kaolin | [part] | | | | | | |
| d.s. | [%] | 35 | 35 | 35 | 35 | 35 | |
| | | | | | | | |
| Absorption | [%] | 6.49 | 4.7 | 3.0 | 1.40 | 0.40 | 1.07 |
| Ratio latex | [%] | 50 | 42.9 | 33.3 | 20 | 33.3 | 33.3 |
| Abs calc. | [%] | 11.4 | 9.7 | 7.6 | 4.6 | 7.6 | 6.0 |

The absorption of n-heptane is an indication for the solubility parameter S for organic volatile compounds, which in turn can be used to calculate the permeability parameter P as described above.

The absorption of n-heptane was also calculated based on the absorption of the individual components of the coating compositions. Hence, for a coating composition comprising starch and synthetic latex, the absorption was calculated as follows:

$$Abs\ calc = \frac{(wt.\%\ latex * Absorption\ latex) + (wt.\%\ starch * Absorption\ starch)}{100}$$

*(For the absorption of the latex, the absorption of SBR coat and of SA coat are taken. For the absorption of starch, Ref coat 1 has been used)*

Notably, the coating compositions of Table 2 exhibited a much lower experimental n-heptane absorption compared to the calculated value, which can not be merely explained by replacing synthetic latex (with high n-heptane absorbance) for an inert material. Indeed, for reference coatings 4 and 5, wherein the synthetic latex polymer was partly replaced by the inert kaolin, the calculated absorbance was in accordance with the experimental value. Thus, a surprising synergistic effect seems to occur for coating compositions comprising the starch as defined herein and synthetic latex.

Table 1 shows that coatings prepared from 100% SBR or SA are not suitable as barrier coating, because they absorb up to 23% and 18% of their own weight on volatile organic compounds, respectively.

Ref coat 1, comprising mainly starch, shows that a film of Starch A absorbs only 0.014% w/w and would therefore be a suitable barrier material. However, starch films are known to be brittle and unsuitable for providing a coating which is sufficiently flexible to provide allow creasing and folding of board (see Table 6). Likewise, Ref coat 2, the composition according to EP3178648 exhibits low heptane absorption, but was also found to crack upon creasing (Table 5).

Furthermore, Ref coat 3, a coating composition comprising starch A and a plasticiser (D-Sorbitol), as described in EP3047068 shows a very low absorption of volatile organic compounds.

Surprisingly, when incorporating up to 50 parts SBR1 (PFC 1a3 and PFC1a4), SBR3 (PFC1b) or SA (PFC2) into Starch A, the heptane absorption remains low, i.e below 3%, indicating that a film comprising starch and latex has a low affinity for hydrophobic volatile compounds (Table 2).

Thus, these results show that synthetic latex polymers constitute a suitable alternative for plasticisers to provide a starch-based coating composition with good barrier properties as reflected in low absorption of heptane.

Example 12; Preparation of paperboard composite materials

The liquid coating compositions as described in Examples 8 and 9 (concentration as indicated in the examples; temperature 50°C) were applied to one side of a base board (e.g. Base board: Korsnäs Gävle, White top brown kraft board, 180 g/m2 liquid packaging base board) using a bent blade with thickness of 0.26 mm. (type T.H. Dixon; model 160-B). The machine speed of the Dixon was 40 m/min and the angle of the bent blade was varied between 11 and 13 cm and a pressure of 1.5, 2.0 and 2.5 bar was applied in order to control the coat weight. The coating has been applied on the white liner side of the board which side has a smoothness ranging between 6 and 7.2 $\mu$m. The coated board was dried to less than 5-7% by weight of moisture. The board samples obtained were conditioned at 23°C and 50% relative humidity for at least 48 hours before testing. Before and after each set of trials, uncoated board was taken as blanc. The coat weight was assessed subtracting weight of the base board from the coated board.

Example 13; Hexane vapour transmission rate (HVTR)

Paperboard samples as described in Example 13 were cut into round samples. 10-11 mL n-hexane was poured into a Versaperm® Alum cup of defined size equipped with a sealing rubber gasket. The board sample was mounted onto the cup with the coated side inside and closed with an alum top ring. Six screws were firmly tightened to seal the cup with the top ring. After the system was equilibrated, the weight loss of hexane from the cup was measured in time during four hours. As the surface area through which vapour can be transferred is known, the Hexane Vapour Transmission Rate (HVTR) can be calculated from the weight loss in grams per day per m2 [g/d.m2]. The measurement was always done in duplo. The results are presented in Table 3.

Table 3 Permeability assessment of paperboard samples coated with Reference coatings (Ref coat) and a plasticiser free coating (PFC) according to the invention

| | | Ref coat 6 | Ref coat 7 | Ref coat 8 | Ref coat 3 | Ref coat 9 | Ref coat 2 | PFC 1a3 |
|---|---|---|---|---|---|---|---|---|
| Comparative Starch 1 | [part] | | 100 | | | | | |
| Comparative Starch 2 | [part] | | | 100 | | | 100 | |
| Starch A | [part] | | | | 100 | | | 100 |
| Starch E | [part] | | | | | 100 | | |
| PVOH | [part] | 100 | 2.8 | 2 | 2 | 2 | 10 | 2 |
| Glycerol | [part] | 0 | 53.8 | 0 | 0 | 20 | | 0 |
| D-Sorbitol | [part] | 0 | 0 | 40 | 40 | 20 | 0 | |
| SBR 1 | [part] | 0 | 0 | 0 | 0 | 0 | 0 | 50 |
| d.s. | [%] | 25 | 30 | 45 | 40 | 35 | 30 | 35 |
| Viscosity | [mPas] | 788 | 1308 | 856 | 1254 | 1042 | 780 | 774 |
| Coat weight | [g/m2] | 23 | 14.1 | 24 | 19.2 | 21.8 | 20 | 21.3 |
| HVTR t=0 | [g/d.m2] | 5 | 32 | 11 | 2.8 | 272 | 38 | 2.4 |
| P (*10^-12) | [kg/s.m. bar] | 4.8 | 18.6 | 10.7 | 2.2 | 247 | 32 | 2.1 |
| HVTR t > 3 m | [g/d.m2] | 8.3 | 178 | 1190 | 270 | n.a. | 71 | 2.6 |
| Ageing (ratio) | [-] | 1.7 | 5.6 | 108.2 | 96.4 | | 1.9 | 1.1 |
| Smoothness | [$\mu$m] | 5.3 | 5.9 | 6.6 | 4.7 | 5.2 | 4.6 | 3.9 |
| (n.a.: not assessed) | | | | | | | | |

Table 3 shows that board coated with Reference coating 6 using a fully hydrolysed polyvinylalcohol similar to example 1 of EP2740685B1, has excellent barrier properties against the migration of hexane vapour. The Permeability coefficient has been estimated to be 4.8 and can be regarded as a target value. Moreover, PVOH barrier keeps a good resistance against the migration of hexane vapour after 3 months. However, the maximum dry solids of polyvinylalcohol is limited to 25% due to the viscosity and rheology of polyvinylalcohol solutions.

Board on to which Reference coating 7 has been applied according to the coating composition as described in Example 3 from EP3047068, i.e. comprising acid degraded and hydroxypropylated pea starch, shows acceptable barrier properties when measured within one week after application. However, the barrier properties deteriorate over time. After 3 months, the HVTR has increased from 32 to 178 $g/d.m^2$ as result of ageing. The ageing ratio is 5.6.

A coating composition as described EP3178648 (Ref coat 8) using a corn starch dextrin, obtained from Cargill under the trade name C*Film 07311 in combination with polyvinylalcohol and D-Sorbitol as plasticiser shows acceptable barrier properties against migration of hexane vapour directly from the start. However after 3 months the permeability has increased seriously, leading to an ageing ratio of 108,2.

Further, a coating composition comprising 100 parts Starch A, 2 parts PVOH and 40 parts D-sorbitol as plasticiser according to the claims of EP3047068 (Ref coat 3) shows excellent barrier properties when within one week after application. However, after 3 months, the HVTR has increased from 2.8 to 270 $g/d.m^2$ due to ageing (ageing ratio is 96).

A coating composition comprising 100 parts Starch E, 2 parts PVOH and 20 parts D-sorbitol and 20 parts glycerol as plasticiser according to the claims of EP3047068 (Ref coat 9) gives already a poor HVTR at t=0.

With reference coating 2 acceptable HVTR and P value was obtained and no significant ageing effects were observed. However, the coating forms cracks upon creasing as demonstrated by Table 5.

Finally, a coating composition according to the invention (PFC1a3) comprising 100 parts Starch A, 2 parts PVOH and 50 parts SBR latex shows excellent barrier properties without ageing effects. The ageing ratio is 1.1.

Thus, the results demonstrate that with a coating composition according to the invention, excellent barrier properties were obtained as reflected by a low HVTR, which properties do not deteriorate overtime, i.e. are not affected by ageing.

Example 14; Effect of ageing on different composite materials

Table shows that paperboard coated with different plasticiser free coating compositions (PFC) according to the invention comprising a starch according to the invention and a synthetic latex gives a coating layer which forms an excellent barrier against the migration of hexane vapour without ageing effects.

**Table 4 Permeability assessment of paperboard samples with coatings comprising different types of starch.**

| Exp. | | PFC 1a3 | PFC 3a | PFC 3b | PFC 3c | PCF 4a1 | PFC 4a2 | PFC 5 | PFC 6 | PFC 7 | Ref coat 10 |
|---|---|---|---|---|---|---|---|---|---|---|---|
| Starch A | [part] | 100 | 100 | 100 | 100 | | | | | 80 | |
| Starch B | [part] | | | | | 100 | 100 | | | | |
| Starch C | [part] | | | | | | | 100 | | | |
| Starch D | [part] | | | | | | | | 100 | | |
| Starch F | [part] | | | | | | | | | 20 | |
| Comparative starch 3 | [part] | | | | | | | | | | 100 |
| PVOH | [part] | 2 | 2 | 0 | | 2 | 2 | | 2 | 2 | 2 |
| EVOH | [part] | | | | 2 | | | | | | |
| SBR 1 | [part] | 50 | | | | 50 | 25 | 50 | | 50 | 50 |
| SBR 2 | [part] | | 50 | 50 | 50 | | | | 50 | | |
| dry solids | [%] | 35 | 35 | 35 | 35 | 35 | 35 | 35 | 40 | 40 | 40 |
| Visco | [mPas] | 775 | 638 | 660 | 740 | 3100 | 3100 | 1248 | 1186 | 580 | 354 |
| Coat weight | [g/m2] | 21.3 | 18.2 | 20.4 | 25.2 | 8.6 | 16 | 18 | 18.3 | 17 | 3.3 |
| HVTR | [g/d.m2] | 2.4 | 1.5 | 3.9 | 3.7 | 38.5 | 15.6 | 4.8 | 9.2 | 8 | >> |
| HVTR 3>m | [g/d.m2] | 2.6 | 0.8 | 1 | 0.3 | n.a. | 15.9 | n.a | 12.2 | n.a. | >> |
| Ageing ratio | | 1.1 | 0.5 | 0.3 | 0.1 | | 1.0 | | 1.3 | | |
| P (*10^-12) | [kg/s.m.bar] | 2.1 | 1.1 | 3.3 | 3.9 | 13.8 | 10.4 | 4.5 | 7 | 5.7 | |
| WD40 test | [-] | pass | pass | pass | pass | pass | pass | pass | pass | pass | fail |
| Smooth - ness | [$\mu$m] | 3.9 | 3.9 | n.a. | n.a. | 5.0 | 4.7 | n.a. | 4.9 | 3.6 | 6.0 |

Comparison between PFC 1a3 and PFC 3a shows that the type of latex is not of major influence on the HVTR value. Comparison between PFC 3a and PFC 3b demonstrates that the presence of PVOH is not required for obtaining a coating with good barrier properties, whereas PFC 3c shows that EVOH is also a suitable additive.

PFC4-7 demonstrate that different types of starch are suitable for obtaining a coating composition with good barrier properties as reflected by good HVTR and P values and passing of the WD40 test. PFC 7 further demonstrates that mixtures of different starch types is also suitable for use in a coating with good barrier properties.

Notably, PCF4a1 demonstrates that a coating with acceptable barrier properties can be obtained obtained despite the low coat weight of 8.6 g/m$^2$.

Comparison between PFC 4a1 and PFC 4a2 shows that the HVTR and P values are improved when the amount of synthetic latex is decreased from 50 to 25 parts. However, Ref coat 10 shows that coating composition comprising starches with a low molecular weight do not provide a coating with adequate barrier properties.

Further all the coating compositions of the invention provide the board with a coating with high oil and grease resistance, as reflected by the WD40 test. WD40 oil is sprayed onto board while keeping the board sample in vertical position. After 15 s the oil is whipped off with a tissue and is visually assessed on dark spots. If dark spots appear due to penetration of oil, the sample fails. If no dark spot appear the sample passes the test.

Example 15; Effect of creasing on cracking of board samples

Creasing tests have been carried out by means of the IGT tester. A special prepared IGT printing reel with a radial raised part in the middle of the reel with a height and width of 1 mm has been used to make a groove in the board surface. The groove has been made at 400 N/cm pressure at a speed of 1 m /sec. The board samples have been tested on the treated side in the machine direction. After the above mentioned creasing test, the crack / grooves of the board samples have been stained with Lorilleux ink according the K&N test. The board samples have been examined by means of the Nikon stereo-microscope.

**Table 5 Effect of creasing on cracking of board samples**

| Experiment | | Ref coat 6 | Ref coat 8 | Ref coat 3 | Ref coat 2 | PFC 1a3 | PFC 3a |
|---|---|---|---|---|---|---|---|
| Starch A | parts | 0 | 100 | 100 | | 100 | 100 |
| Comp starch 2 | | | | | 100 | | |
| PVOH | parts | 100 | 2 | 2 | 10 | 2 | 2 |
| EVOH | parts | | | | | | |
| D-Sorbitol | | | 40 | | | | |
| SBR 1 | | 0 | 0 | 0 | 0 | 50 | |
| SBR 2 | | | | | | | 50 |
| dry solids | [%] | 25 | 40 | 30 | 30 | 35 | 35 |
| Visco | [mPas] | 790 | 1254 | 710 | 780 | 775 | 638 |
| Coat weight | [g/m2] | 23 | 19.2 | 17.8 | 20 | 21.3 | 18.2 |
| HVTR | [g/d.m2] | 5 | 2.8 | 78 | 38 | 2.4 | 1.5 |
| P (*10^-12) | [kg/s.m.bar] | 4.8 | 2.2 | 58 | 32 | 2.1 | 1.1 |
| Cracks upon creasing | | no | yes | yes | yes | no | no |

Table shows that Reference coating 6, comprising only PVOH, shows no cracking, whereas all other Reference coatings show severe crack formation after creasing.

The coating compositions according to the invention PFC1a3 and PFC3a show no cracks upon creasing.

Tensile testing

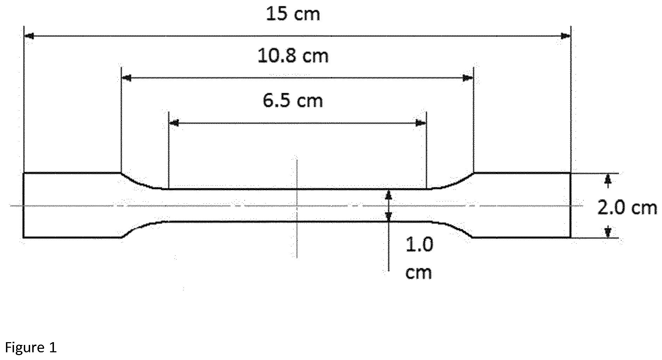

Films were prepared as described in Example 11. After at least 72 hours drying at 23 °C and 50 % relative humidity, test strips were taken out of the film with the Zwick punching press using a cutting die, to prepare a dog bone shaped sample with the following dimensions (see Figure 1):

- Overall length: 15 cm

- Grip distance 10.8

- Gauge length (length linear part): 6.5 cm

- Width of narrow parallel portion: 10 mm (1.0 cm)

- Width at ends: 20 mm (2.0 cm)

- Thickness: approximately 100-200 $\mu$m but measured exactly before each measurement measured at three points along the gauge length.

After thickness measurements, the following mechanical properties have been tested by means of the Zwick tensile tester type 1446 using the following settings:

- Zwick measuring cell type: 8387

- Max load measuring cell: 10 kN

- Pre-load force: 0.1 N

- Pre-load speed: 10 mm /min

- Test speed: 100 mm / min

Table 6; Tensile strength of coating compositions

| Experiment | | Ref coat 1 | Ref coat 8 | Ref coat 9 | Ref coat 2 | PFC 1a3 | PFC 3a | PFC 3a2 | PFC 1b | PFC 8 | PFC 4a1 |
|---|---|---|---|---|---|---|---|---|---|---|---|
| Starch A | parts | 100 | 100 | | | 100 | 100 | 100 | 100 | 100 | |
| Starch B | | | | | | | | | | | 100 |
| Starch E | | | | 100 | | | | | | | |
| Ref 2 | | | | | 100 | | | | | | |
| PVOH | parts | | 2 | 2 | 10 | 2 | 2 | 2 | 2 | 2 | 2 |
| Glycerol | | | | 20 | | | | | | | |
| D-Sorbitol | | | 40 | 20 | | | | | | | |
| SBR 1 | | | | | | 50 | | | | 50 | 50 |
| SBR 2 | | | | | | | 50 | 25 | | | |
| SBR 3 | | | | | | | | | 50 | | |
| HG 90 Kamin | | | | | | | | | | 100 | |
| dry solids | [%] | 35 | 35 | 35 | 30 | 35 | 35 | 35 | 35 | 35 | 35 |
| Elongation till max. F | [%] | 4.4 | 6.0 | 51 | 4 | 11.8 | 13.0 | 13.7 | 10.4 | 2.9 | 8.9 |
| Elongation till break | [%] | 4.7 | 19.3 | 66 | - | 22.3 | 17.2 | 17.1 | 23.6 | 2.9 | 16.4 |

Table 6 shows that a film of only starch (Ref coat 1) has a very poor flexibility with an Elongation of only 4.4%. *Ref coat* 8 lacks flexibility with an Elongation of only 6% despite the presence of 40 parts D-Sorbitol. *Ref coat* 9 is a film containing a mixture of Starch A and a mixture of 20 parts glycerol and 20 parts D-Sorbitol and is very flexible, but lacks barrier properties (Table 3). The coating compositions of the invention (PFC1a3, 3a, 3a2, 1b, 4a1) all have an Elongation until Fmax of at least 8%. Finally, *Ref coat* 2 prepared as film according to a composition as disclosed in EP3178648, has a very poor flexibility with an elongation until Fmax of only 4%. Furthermore, it is also shown that addition of pigments decreases the flexibility of the coating (PFC 8).

Example 16; Influence of coat weight on barrier properties

Table 7 The influence of coat weight of coating compositions according to the invention

| Experiment | | | | PFC 6 | |
|---|---|---|---|---|---|
| Starch D | [part] | | | 100 | |
| PVOH | [part] | | | 2 | |
| SBR 2 | | | | 50 | |
| dry solids | [%] | | | 40 | |
| Visco | [mPas] | | | 1186 | |
| Dixon trials | | | | | |
| Blade angle | [cm] | | 11 | 11 | 11 |
| Pressure | [bar] | | 1.5 | 2 | 2.5 |
| Board results | | | | | |
| Coat weight | [g/m2] | | 8.7 | 13.4 | 18.3 |
| HVTR | [g/d.m2] | | 48 | 10.7 | 9.2 |
| P | [kg/s.m.bar] | | 17 | 6 | 7 |
| WD40 test | [-] | | Pass | pass | pass |
| Smoothness | [$\mu$m] | | 4.97 | 4.96 | 4.33 |

Table 7 shows the influence of the coat weight on the HVTR and permeability (P) of the coating. A duplex white top brown craft board (Korsnäs Gävle,. grammage: 180 g/m$^2$; thickness: 280 $\mu$m; roughness white liner side: 7.0 $\mu$m) was provided with a coating as defined in Table 4 by blade coating, the thickness of the coating should at least cover the roughness of the board which is 7.0 $\mu$m. The results show that the permeability coefficient remains constant when the coatweight is above about 10 g/m$^2$ for this type of board and applying the coating by blade coating. The smoothness of the board improved to less than 5 $\mu$m (PPS)

**Claims**

1. A coating composition for reducing hydrocarbon migration through a cellulosic substrate, the coating composition comprising

   - starch having a weight average molecular weight of between 500 kDa and 20.000 kDa;
   - a synthetic latex polymer, wherein the polymer has a Tg of between -10 °C and 25 °C.

2. A coating composition according to claim 1, wherein the synthetic latex polymer is selected from the group consisting of styrene butadiene rubber, styrene acrylate, polyacrylate and mixtures thereof.

3. A coating composition according to claim 1 or 2, wherein ratio between synthetic latex polymer and starch is between 1:6 and 2:1.

4. A coating composition according to any of the preceding claims, wherein the starch has a weight average molecular weight of between 1000 kDa and 17.000 kDa.

5. A coating composition according to any of the preceding claims, wherein the starch is an oxidized starch, preferably an oxidized carboxylated starch.

6. A coating composition according to any of the preceding claims, wherein the starch is hydroxyethylated or hydroxypropylated.

7. A coating composition according to any of the preceding claims, wherein the starch is waxy potato starch.

8. A coating composition according to any of the preceding claims, wherein the coating composition further comprises polyvinyl alcohol or poly(vinyl alcohol-co-ethylene).

9. A coating composition according to any of the preceding claims, wherein the coating composition does not comprise a plasticizer.

10. A coating composition according to any of the preceding claims, wherein the coating composition comprises an aqueous continuous phase and a hydrophobic dispersed phase, wherein the aqueous phase comprises the starch in dissolved form, and wherein the dispersed phase comprises the synthetic latex polymer in the form of droplets, which droplets have a diameter of between 10 nm and 5000 nm.

11. A coating composition according to any of the preceding claims, wherein the coating composition has a dry solids content of at least 30 wt.%, based on the total weight of the composition.

12. Method for reducing hydrocarbon migration through a cellulosic substrate, said method comprising

- providing a cellulosic substrate;
- coating said cellulosic substrate on at least one side with a coating composition as defined in any of claims 1 - 11, and optionally drying the cellulosic substrate.

13. Use of a coating composition according to any of claims 1 - 11 for reducing hydrocarbon migration through a cellulosic substrate.

14. Cellulosic substrate, comprising a coating composition as defined in any of claims 1 - 11.

15. Cellulosic substrate according to claim 14, wherein said cellulosic substrate has a weight of 60 - 400 $g/m^2$.

16. Cellulosic substrate according to any of claims 14 or 15, wherein the coating is present at a weight between 3 and 25 $g/m^2$, preferably 7.5 - 20 $g/m^2$.

17. Method for preparing an aqueous coating composition as defined in claim 10, comprising

- providing an aqueous solution of starch having a weight average molecular weight of between 500 kDa and 20.000 kDa;
- providing an aqueous emulsion of a synthetic latex polymer having a Tg of between -10 °C and 25 °C;
- mixing the aqueous solution of starch with the emulsion of the synthetic latex polymer, thereby forming said aqueous coating composition.

Figure 1

Europäisches
Patentamt

European
Patent Office

Office européen
des brevets

## EUROPEAN SEARCH REPORT

**Application Number**

EP 19 21 0419

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 561 178 A1 (FISKEBY BOARD AB [SE]) 30 October 2019 (2019-10-30) * paragraphs [0001], [0004], [0021], [0025], [0007], [0055], [0042] - [0048], [0084], [0087]; claims * ----- | 1-4,9-17 | INV. $C09D103/02$ $C09D103/04$ $C09D103/08$ $C09D103/10$ $C09D113/02$ |
| X | KOIVULA HANNA M ET AL: "Machine-coated starch-based dispersion coatings prevent mineral oil migration from paperboard", PROGRESS IN ORGANIC COATINGS, ELSEVIER BV, NL, vol. 99, 13 June 2016 (2016-06-13), pages 173-181, XP029677963, ISSN: 0300-9440, DOI: 10.1016/J.PORGCOAT.2016.05.017 * paragraph [02.1] - paragraph [02.7] * * paragraph [3.2.4] - paragraph [3.2.5] * ----- | 1-3,5,6, 9,12-14 | $C09D109/06$ $D21H19/54$ $D21H19/58$ $C08B31/10$ $C08B31/18$ |
| X | US 2018/056695 A1 (BACKFOLK KAJ [FI] ET AL) 1 March 2018 (2018-03-01) * paragraphs [0053] - [0058], [0061] - [0063]; claims * ----- | 1-3,7, 12-14 | |
| X | EP 1 176 255 A1 (DOW CHEMICAL CO [US]) 30 January 2002 (2002-01-30) * paragraph [0034] * ----- | 1-3,5,14 | TECHNICAL FIELDS SEARCHED (IPC) C09D C09J D21H C08B |
| E | WO 2019/243671 A1 (KEMIRA OYJ [FI]) 26 December 2019 (2019-12-26) * claims; tables 1,4 * ----- | 1,8, 12-14 | |

The present search report has been drawn up for all claims

| Place of search | Date of completion of the search | Examiner |
|---|---|---|
| Munich | 7 May 2020 | Vaccaro, Eleonora |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 21 0419

This annex lists the patent family members relating to the patent documents cited in  the above-mentioned European search report.
The members are as contained in the European Patent Office EDP file on
The European Patent Office is in no way liable for these particulars which are merely given for the purpose of information.

07-05-2020

| Patent document cited in search report | | | Publication date | Patent family member(s) | | | Publication date |
|---|---|---|---|---|---|---|---|
| EP | 3561178 | A1 | 30-10-2019 | EP | 3561178 | A1 | 30-10-2019 |
| | | | | SE | 1850510 | A1 | 28-10-2019 |
| US | 2018056695 | A1 | 01-03-2018 | AU | 2016238448 | A1 | 24-08-2017 |
| | | | | CA | 2977431 | A1 | 29-09-2016 |
| | | | | CN | 107405939 | A | 28-11-2017 |
| | | | | EP | 3274185 | A1 | 31-01-2018 |
| | | | | JP | 2018513033 | A | 24-05-2018 |
| | | | | US | 2018056695 | A1 | 01-03-2018 |
| | | | | WO | 2016151511 | A1 | 29-09-2016 |
| EP | 1176255 | A1 | 30-01-2002 | AT | 455902 | T | 15-02-2010 |
| | | | | AU | 8632301 | A | 05-02-2002 |
| | | | | CA | 2419949 | A1 | 31-01-2002 |
| | | | | CA | 2704379 | A1 | 31-01-2002 |
| | | | | EP | 1176255 | A1 | 30-01-2002 |
| | | | | EP | 1303670 | A1 | 23-04-2003 |
| | | | | EP | 2251484 | A1 | 17-11-2010 |
| | | | | ES | 2339921 | T3 | 27-05-2010 |
| | | | | US | 2004014844 | A1 | 22-01-2004 |
| | | | | US | 2005061203 | A1 | 24-03-2005 |
| | | | | WO | 0208517 | A1 | 31-01-2002 |
| WO | 2019243671 | A1 | 26-12-2019 | FI | 20185555 | A1 | 21-12-2019 |
| | | | | WO | 2019243671 | A1 | 26-12-2019 |

EPO FORM P0459

For more details about this annex : see Official Journal of the European Patent Office, No. 12/82

# EP 3 825 368 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2740685 A
- EP 3047068 A
- WO 2016174309 A
- WO 2018062993 A
- WO 2017138814 A
- EP 2867409 A
- EP 3178648 A
- EP 2740685 B1

### Non-patent literature cited in the description

- **KLEEBAUER M. et al.** *Biofibre magazine,* 2018, vol. 7-8, 26-30
- **GEORGE, S.C. ; THOMAS S.** *Prog. Poly. Sci,* 2001, vol. 26, 985-1017
- **WHISTLER et al.** Chemistry and Technology. Academic press Inc, 1984
- **A. VAN HERK.** Chemistry and Technology of emulsion polymerisation. Blackwell publishing, 2005